# EUROPEAN PATENT APPLICATION

(11) **EP 3 099 065 A1**
(43) Date of publication of application: **30.11.2016**
(21) Application number: 15739988.2
(22) Date of filing: 05.01.2015
(51) Int. Cl.: H04N 7/18, B60R 1/00, B60R 21/00, G08G 1/16

(54) **PERIPHERY MONITORING DEVICE FOR WORK MACHINE**

(30) Priority: 23.01.2014 JP 2014010706
(71) Applicant: Hitachi Construction Machinery Co., Ltd., Bunkyo-ku Tokyo 112-8563 (JP)
(72) Inventor: OOTA, Moritaka, Tsuchiura-shi Ibaraki 300-0013 (JP); ISHIMOTO, Hidefumi, Tsuchiura-shi Ibaraki 300-0013 (JP); KOWATARI, Yoichi, Tsuchiura-shi Ibaraki 300-0013 (JP); INANOBE, Yoshihiro, Tsuchiura-shi Ibaraki 300-0013 (JP)
(74) Representative: Beetz & Partner mbB
(86) International application number: PCT/JP2015/050048
(87) International publication number: WO 2015/111422

(57) **Abstract**

A surroundings monitoring device for work machine includes: an imaging device; an image generation unit; a display control unit; an obstruction detection unit that detects an obstruction present in surroundings of the work machine; a movement direction determination unit that detects a direction of relative movement of the obstruction detected by the obstruction detection unit with respect to the work machine; and a determination unit that, based on the direction of relative movement detected by the movement direction determination unit, if the direction of relative movement of the obstruction falls within a predetermined range of movement direction, determines that the obstruction is an obstruction to be notified that needs to be notified to a driver of the work machine.

## Description

### TECHNICAL FIELD

The present invention relates to a surroundings monitoring device for a work machine.

### BACKGROUND ART

In the prior art, with a work machine such as a dump truck or the like, it has been arranged, if it is determined that an obstruction is positioned within a warning region, to inform the driver of the situation in the surroundings of the work machine by displaying a camera image upon a monitor (refer to PTL 1). With the device of PTL 1, a warning region within which it is necessary to warn the driver of the presence of an obstruction is set according to the running state of the dump truck.

### CITATION LIST

### PATENT LITERATURE

PTL 1: Japanese Laid-Open Patent Publication 2012-256113

### SUMMARY OF INVENTION

### TECHNICAL PROBLEM

However since, with the device of PTL 1 described above, the warning region is set according to the running state of the dump truck, accordingly it is determined to be necessary to issue a warning even when, for example, an obstruction is travelling side by side with the dump truck, when an obstruction is moving away from the dump truck, or when an obstruction is waiting side by side with the dump truck, and so on.

### SOLUTION TO TECHNICAL PROBLEM

A surroundings monitoring device for work machine according to a first aspect of the present invention comprising: an imaging device that captures an image of surroundings of the work machine; an image generation unit that performs point of view conversion upon an image captured by the imaging device to convert to a point of view from above so as to generate a virtual viewpoint image; and a display control unit that displays the virtual viewpoint image generated by the image generation unit upon a display device, the surroundings monitoring device further comprises: an obstruction detection unit that detects an obstruction present in surroundings of the work machine; a movement direction determination unit that detects a direction of relative movement of the obstruction detected by the obstruction detection unit with respect to the work machine; and a determination unit that, based on the direction of relative movement detected by the movement direction determination unit, if the direction of relative movement of the obstruction falls within a predetermined range of movement direction, determines that the obstruction is an obstruction to be notified that needs to be notified to a driver of the work machine.

### ADVANTAGEOUS EFFECTS OF INVENTION

According to the present invention it is possible to determine in an appropriate manner, on the basis of the relative movement direction of an obstruction, whether or not this obstruction is an obstruction to be notified, which needs to be notified to the driver.

### BRIEF DESCRIPTION OF DRAWINGS

Fig. 1 is a plan view showing the overall structure of a dump truck to which a surroundings monitoring device according to a first embodiment of the present invention is mounted;
Fig. 2 is a block diagram showing the structure of this surroundings monitoring device according to the first embodiment;
Fig. 3 is a figure for explanation of the positions in which imaging devices are installed,
and for explanation of their imaging ranges;
Fig. 4 is a figure for explanation of an angular range for a direction of movement;
Fig. 5 is a figure for explanation of a notification object region during forward travel and when making preparations for forward travel;
Fig. 6 is a figure for explanation of a notification object region during rearward travel and when making preparations for rearward travel;
Fig. 7 is a figure for explanation of a notification object region when the dump truck is stationary;
Fig. 8 is a figure for explanation of bird's eye view image processing;
Fig. 9 is a flow chart for explanation of the control by this surroundings monitoring device according to the first embodiment;
Figs. 10(a) through 10(d) are figures showing examples of situations around the dump truck, and corresponding images of the surroundings of the dump truck that are displayed upon a display monitor;
Fig. 11 is a block diagram showing the structure of a surroundings monitoring device according to a second embodiment of the present invention;
Fig. 12 is a figure showing a notification object region in this second embodiment;
Fig. 13 is a flow chart for explanation of the control by this surroundings monitoring device according to the second embodiment;
Fig. 14 is a block diagram showing the structure of a surroundings monitoring device according to a variant of the second embodiment of the present invention;
Fig. 15 is a block diagram showing the structure of a surroundings monitoring device according to a third embodiment of the present invention;
Figs. 16(a) and 16(b) are respectively a front view and a rear view of a dump truck according to a fourth embodiment of the present invention, showing positions at which a millimeter wave radar system is mounted;
Figs. 17(a) and 17(b) are respectively a left side view and a right side view of this dump truck according to the fourth embodiment of the present invention, showing other positions at which this millimeter wave radar system is mounted; and
Fig. 18 is a block diagram showing the structure of this surroundings monitoring device according to the fourth embodiment of the present invention.

### DESCRIPTION OF EMBODIMENTS

### First Embodiment

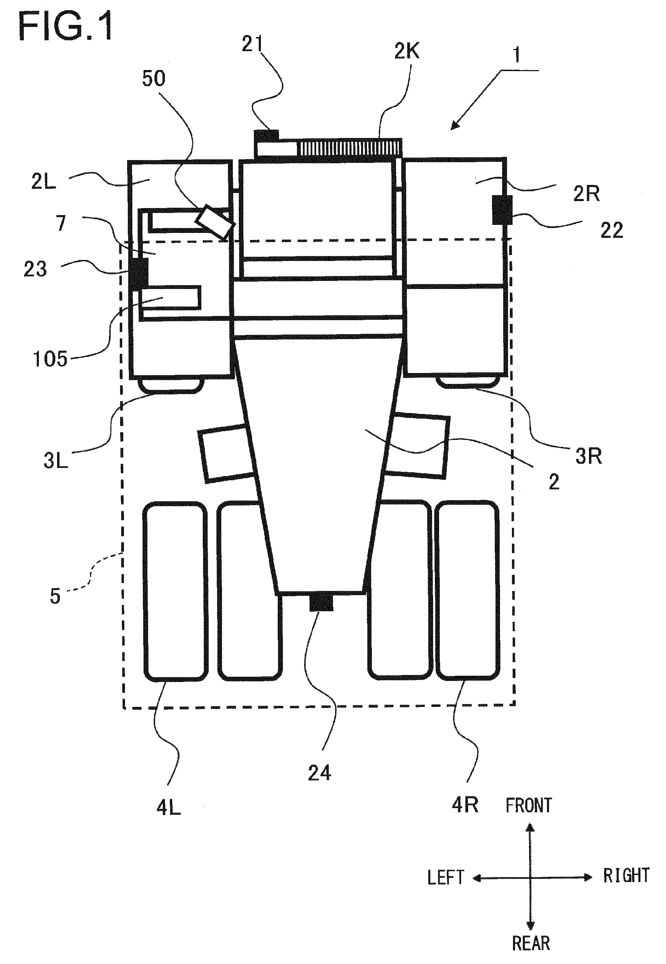

The details of a surroundings monitoring device according to a first embodiment of the present invention will now be explained with reference to the drawings. It should be understood that, in this first embodiment, by way of example, a case is explained in which the surroundings monitoring device is mounted to a super-large sized dump truck of the self-propelled type that is used for mining work and so on. Fig. 1 is a plan view of a dump truck 1 to which the surroundings monitoring device according to the first embodiment of the present invention is mounted.

This dump truck 1 comprises a vehicle body frame 2 that defines the main body of the dump truck 1, front wheels 3R and 3L that are provided at the front of the vehicle body frame 2, rear wheels 4R and 4L that are provided at the rear of the vehicle body frame 2, a vessel 5 that can be raised and lowered with respect to the vehicle body frame 2 and that constitutes a loading platform upon which earth or sand or mineral material or the like is loaded, and a driver's cab 7. It should be understood that, in Fig. 1, the vessel 5 is only shown by a broken line, in order to make the structure of the dump truck 1 more easily visible.

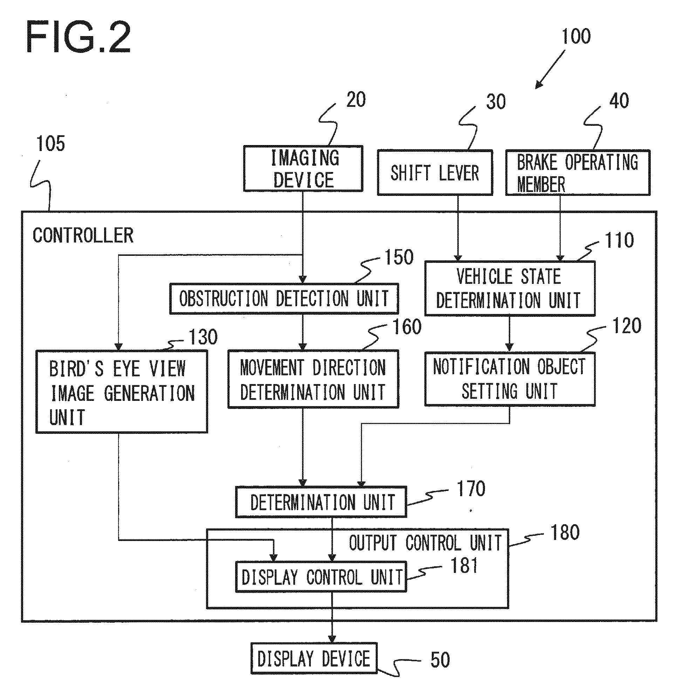

A seat (not shown in the figures) for a driver, operating members of various kinds that are actuated by the driver for operating the dump truck 1, a display device 50 that is provided to the front right side of the driver's seat, and a controller 105 are provided within the driver's cab 7. The operating members include a shift lever 30 and a brake operating member 40 that will be described hereinafter (refer to Fig. 2).

Fig. 2 is a block diagram showing the structure of this surroundings monitoring device 100 according to the first embodiment. The surroundings monitoring device 100 is a system that monitors whether or not any obstruction is present in the surroundings of the dump truck 1, and that, according to requirements, notifies the driver of the presence of an obstruction. Here, the surroundings monitoring device 100 includes an imaging device 20, the shift lever 30, the brake operating member 40, the controller 105, and the display device 50. The imaging device 20 is a device for acquiring images of the entire surroundings of the dump truck 1, and includes a front camera 21, a right side camera 22, a left side camera 23, and a rear camera 24, all of which are installed at external peripheral portions of the dump truck 1.

The front camera 21 is installed at the upper end portion of a sloping ladder 2K that is installed at the front end portion of the dump truck 1, and is adapted to be capable of capturing an image of the region in front of the dump truck 1. The right side camera 22 is installed on the right side facing portion of a right upper deck 2R that is positioned at the front right portion of the dump truck 1, and is adapted to be capable of capturing an image of the region on the right side of the dump truck 1, in other words of capturing an image of the region from the diagonal right front to the diagonal right rear. And the left side camera 23 is installed in a position that is substantially symmetrical to the right side camera 22 but on the left side, in other words on the left side facing portion of a left upper deck 2L that is positioned at the front left portion of the dump truck 1, and is adapted to be capable of capturing an image of the region on the left side of the dump truck 1, in other words of capturing an image of the region from the diagonal left front to the diagonal left rear.

Moreover, the rear camera 24 is installed above an axle that connects the right rear wheel 4R and the left rear wheel 4L, in the vicinity of the rotational axis of the vessel 5, and is adapted to be capable of capturing an image of the region behind the dump truck 1. Since, as will be described hereinafter, the images captured by these cameras 21 through 24 are to be combined, accordingly all of the cameras 21 through 24 are arranged at positions upon the dump truck 1 that are at approximately the same height.

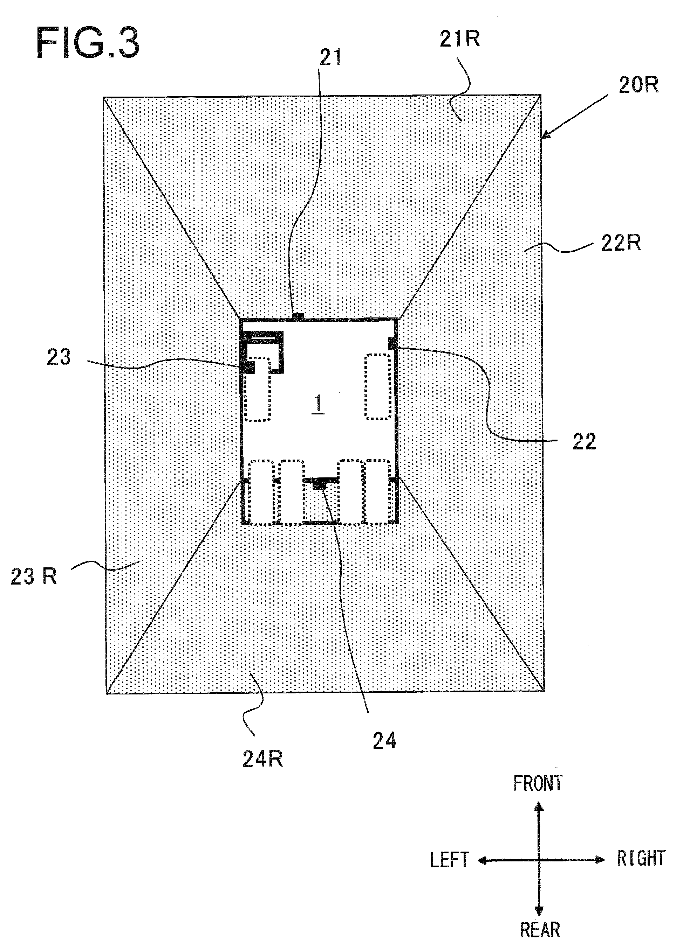

Fig. 3 is a plan view of the dump truck 1 and the region around it, schematically showing the positions in which the imaging device 20 is installed and its imaging range. By disposing the front camera 21, the right side camera 22, the left side camera 23, and the rear camera 24 at external peripheral portions around the dump truck 1, it is possible to acquire images of almost the entire surroundings of the dump truck 1, as shown in Fig. 3. It should be understood that Fig. 3 shows the imaging range that corresponds to a virtual viewpoint image 20R when the images captured by the cameras 21 through 24 are combined as will be explained hereinafter, and this virtual viewpoint image 20R is formed from the respective imaging ranges 21R, 22R, 23R, and 24R of the cameras 21 through 24. The image data for the images around the dump truck 1 captured by the cameras 21 through 24 is inputted to the controller 105.

The shift lever 30 is an operating member that is actuated by the driver for changing the direction of travel and the speed stage of the dump truck 1, and is disposed within the driver's cab 7 near the driver's seat. A shift lever position signal is inputted to the controller 105 from the shift lever 30, showing to which of a forward position, a neutral position, and a reverse position this movement lever 30 is changed over. The brake operating member 40 is an operating member that is actuated by the driver for decelerating or stopping the dump truck 1 while it is traveling, and is disposed within the driver's cab 7 near the driver's seat. A signal showing whether or not the brake is operating, in other words a signal that specifies the presence or absence of braking operation by the driver, is inputted to the controller 105 by this brake operating member 40. It should be understood that it is not possible to operate the shift lever 30 if the brake operating member 40 is not being operated.

The controller 105 is an electronic control unit that comprises a CPU and equipment peripheral to that CPU such as ROM and RAM and so on, and performs overall control of the surroundings monitoring device 100. This controller 105 comprises a vehicle state determination unit 110, a notification object setting unit 120, a bird's eye view image generation unit 130, an obstruction detection unit 150, a movement direction determination unit 160, a determination unit 170, and an output control unit 180, all of which may be implemented in the format of software for the CPU. The controller 105 performs point of view conversion upon the sets of image data inputted from the imaging device 20 and combines them to generate a virtual viewpoint image 20R from a point of view from above. The controller 105 displays the virtual viewpoint image 20R upon the display device 50. The controller 105 also determines whether any obstruction or obstacle that must be notified to the driver is present, and, if so, notifies this information to the driver. This control performed by the controller 105 will be described hereinafter.

The display device 50 includes a display monitor, which is an image display unit that comprises, for example, a liquid crystal panel or the like. Characters and images corresponding to the signals from the controller 105 are displayed upon this display monitor.

Next, the details of the operation of the surroundings monitoring device 100 will be explained. First, the control for determining an obstruction which needs to be notified (i.e. an obstruction for notification, or obstruction to be notified) that is performed by the controller 105 of the surroundings monitoring device 100 will be explained.

The vehicle state determination unit 110 receives the shift lever position signal from the shift lever 30 and the brake actuation signal from the brake operating member 40, and determines the vehicle state of the dump truck 1 on the basis of this shift lever position signal and this brake actuation signal. Here, by the vehicle state of the dump truck 1, is meant the operating state (traveling state) that the dump truck 1 is in.

When the shift lever position signal shows that the shift lever is in the forward position and the brake actuation signal shows that the brake is not being actuated, then the vehicle state determination unit 110 determines that the dump truck 1 is "moving forward". And, when the shift lever position signal shows that the shift lever is in the forward position and the brake actuation signal shows that the brake is being actuated, then it is determined that the dump truck 1 is "preparing to move forward". Moreover, when the shift lever position signal shows that the shift lever is in the rearward position and the brake actuation signal shows that the brake is not being actuated, then it is determined that the dump truck 1 is "moving rearward". Yet further, when the shift lever position signal shows that the shift lever is in the rearward position and the brake actuation signal shows that the brake is being actuated, then it is determined that the dump truck 1 is "preparing to move rearward". And, when the shift lever position signal shows that the shift lever is in the neutral position, then the unit 110 determines that the dump truck 1 is "stationary", irrespective of the value of the brake actuation signal. The vehicle state determination unit 110 outputs a vehicle state signal that specifies the vehicle state of the dump truck 1 to the notification object setting unit 120.

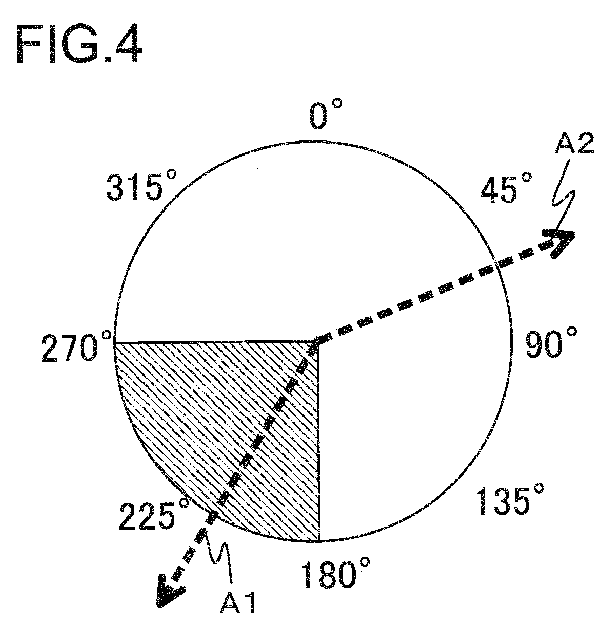

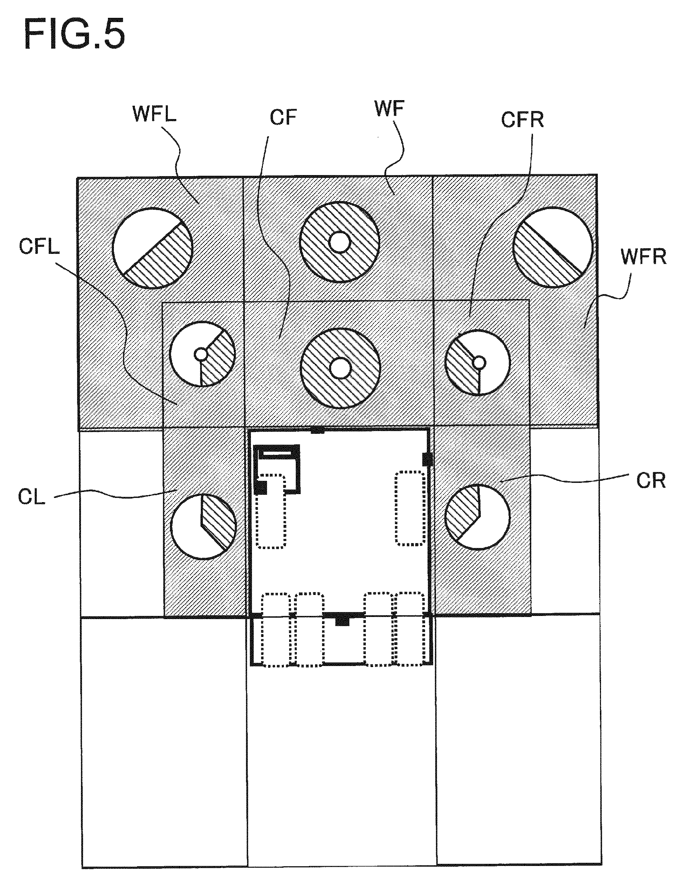

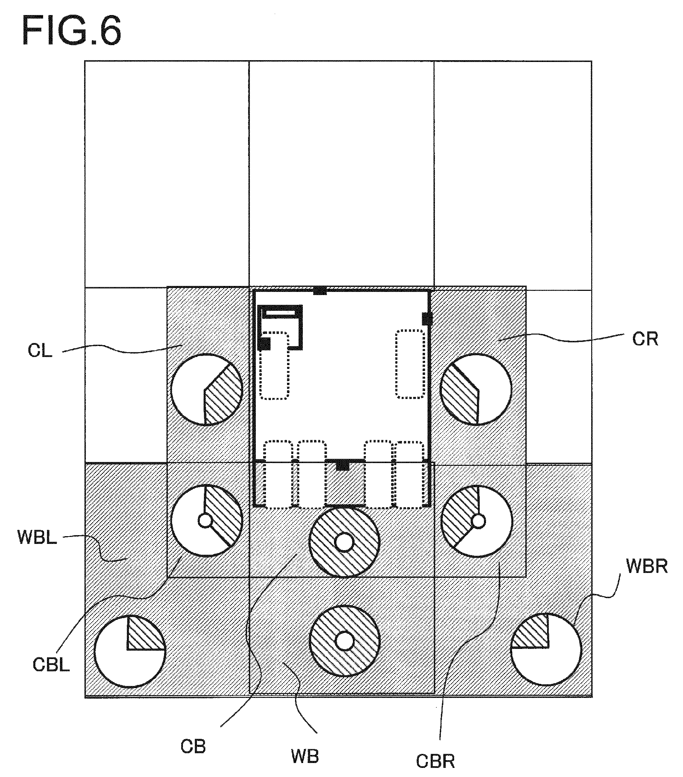

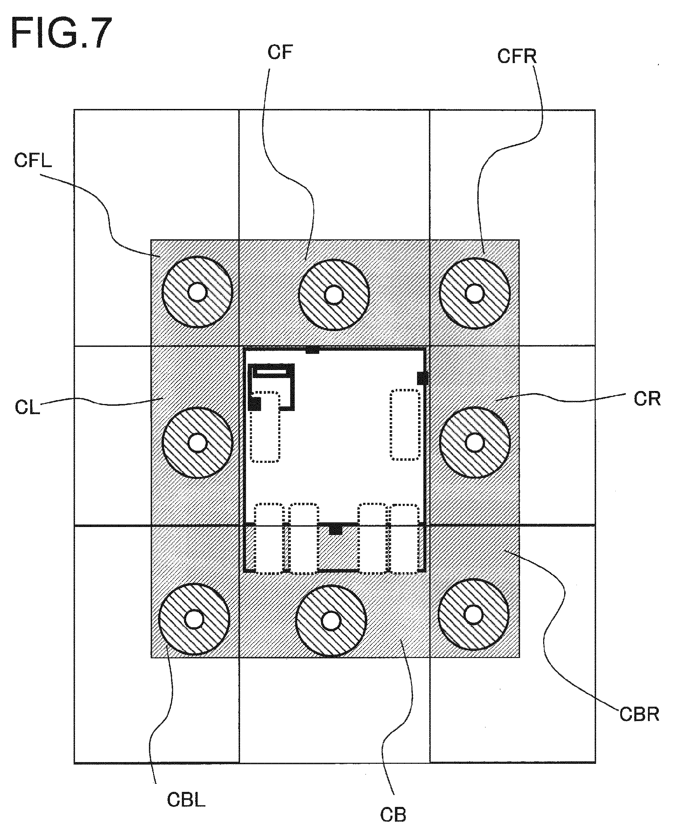

On the basis of the vehicle state signal inputted from the vehicle state determination unit 110, the notification object setting unit 120 sets object regions for notification (notification object regions) within which the existence of an obstruction needs to be notified to driver, and relative movement directions of obstructions that must be notified to the driver in these notification object regions. The notification object regions are selected from within the virtual viewpoint image 20R of the entire surroundings of the dump truck 1 shown in Fig. 3. Thus, the virtual viewpoint image 20R of the entire surroundings of the dump truck 1 may also be termed the "notification region". Fig. 4 is a figure for explanation of the angular range of a direction of movement, and Figs. 5 through 7 are plan views of the dump truck 1 and its surroundings, showing the notification object regions and the obstruction movement directions that correspond to the various vehicle states of the dump truck 1. Fig. 5 is a figure showing the notification object regions and the obstruction relative movement directions when the dump truck 1 is "moving forward" or when it is "preparing to move forward"; Fig. 6 is a figure showing the notification object regions and the obstruction relative movement directions when the dump truck 1 is "moving rearward" or when it is "preparing to move rearward"; and Fig. 7 is a figure showing the notification object regions and the obstruction relative movement directions when the dump truck 1 is "stationary".

First, as shown in Figs. 5 through 7, the notification region 20R around the entire surroundings of the dump truck 1 is divided into eight regions, i.e. the front of the dump truck 1, its right side, its left side, its rear, its right front, its left front, its right rear, and its left rear. Furthermore, each of these regions is divided into two regions: a region neighboring the dump truck 1, and a normal region. In other words, the notification region 20R around the entire surroundings of the dump truck 1 is made up from sixteen notification candidate regions, as shown in Fig. 7. The neighboring region may be set to a range of around 4 meters from the external periphery of the dump truck 1, while the normal region may be set to a range of around 8 meters from the external periphery of the dump truck 1, although this does not quite agree with the regions shown in Figs. 5 through 7. It should be understood that the ranges of the neighboring region and the normal region are not particularly limited to these values.

As shown in Fig. 5, when the dump truck 1 is "moving forward" or is "preparing to move forward", among the sixteen notification candidate regions, eight notification candidate regions are set as notification object regions as shown by the hatching in Fig. 5: a forward neighboring region CF, a forward normal region WF, a right forward neighboring region CFR, a right forward normal region WFR, a left forward neighboring region CFL, and a left forward normal region WFL, which are present forward of, forward and to the right of, or forward and to the left of the dump truck 1; and a right side neighboring region CR and a left side neighboring region CL that are present neighboring the sides of the dump truck 1.

The circles in the notification object regions shown in Figs. 5 through 7 will now be explained. As shown in Fig. 4, on each of these circles, the direction of radiation from the center of the circle shows the direction of relative movement of an obstruction, and the angle of this direction increases in the clockwise direction, with 0° representing forwards along the front and rear direction of the dump truck 1 and 180° representing rearwards along that direction. The hatched portion within this circle is the angular range that is set as the range of relative movement direction of an obstruction that needs to be notified. In Fig. 4, as one example, the angular range of relative movement direction of an obstruction that needs to be notified is shown as being from 180° to 270°. The arrow signs A1 and A2 are hypothetical directions of relative movement of an obstruction: if the direction of relative movement of the obstruction is in the direction of the arrow sign A1, then this is included within the angular range described above, while, if it is the arrow sign A2, then it is outside the angular range described above. In the circles for the forward neighboring region CF and the forward normal region WF shown in Fig. 5,, the angular range of relative movement direction of an obstruction that needs to be notified is from 0° to 360°, since the possibility of contact or the like is comparatively high if an obstruction is present in front of the dump truck 1. It should be understood that the small circles in the center portions of some of the circles within the notification object regions shown in Figs. 5 through 7, for example in the forward neighboring region CF shown in Fig. 5 and so on, mean that in these regions obstructions that are stationary can be included as objects for notification, regardless of an angular range, and obstructions that are stationary in these regions are determined by the determination unit 170 that will be explained hereinafter as being objects for notification. In particular, since it is possible to set these regions on the right side of the dump truck 1 and behind it, which are difficult locations for the driver to see, accordingly this can be very effective for helping the driver to check upon the presence of any obstruction.

In the right forward neighboring region CFR, the angular range in which the relative movement direction is from 180° to 315° is set as the obstruction relative movement directional range that must be notified, and furthermore a stationary obstruction is also set to be included as an object for notification. On the other hand, in the right forward normal region WFR, the angular range in which the relative movement direction is from 135° to 315° is set as the obstruction relative movement directional range that must be notified. And, in the left forward neighboring region CFL, the angular range in which the relative movement direction is from 45° to 180° is set as the obstruction relative movement directional range that must be notified, and furthermore a stationary obstruction is also set to be included as an object for notification. Moreover, in the left forward normal region WFL, the angular range in which the relative movement direction is from 45° to 225° is set as the obstruction relative movement directional range that must be notified. In the right side neighboring region CR, the angular range in which the relative movement direction is from 225° to 360° (i.e. 0°) is set as the obstruction relative movement directional range that must be notified; and, in the left side neighboring region CL, the angular range in which the relative movement direction is from 0° to 135° is set as the obstruction relative movement directional range that must be notified. It should be understood that these angular ranges that are set as above are only examples; it would also be acceptable to use other angular ranges, provided that they can be employed appropriately for specifying obstructions that must be notified. Moreover, although these ranges are specified as angular ranges, it would also be possible to employ some other format, such as vector coordinate ranges or the like. The same is true for other cases, such as the case of rearwards motion which will be described hereinafter, and so on.

As shown in Fig. 6, when the dump truck 1 is "moving rearward" or is "preparing to move rearward", among the sixteen notification candidate regions, eight notification candidate regions are set as notification object regions as shown by the hatching in Fig. 6: a rearward neighboring region CB, a rearward normal region WB, a right rearward neighboring region CBR, a right rearward normal region WBR, a left rearward neighboring region CBL, and a left rearward normal region WBL, which are present rearward of, rearward and to the right of, or rearward and to the left of the dump truck 1; and the right side neighboring region CR and the left side neighboring region CL that are present neighboring the sides of the dump truck 1.

In the rearward neighboring region CB and the rearward normal region WB, as shown in Fig. 6, the angular range in which the relative movement direction is from 0° to 360° is set as the obstruction relative movement directional range that must be notified, and furthermore a stationary obstruction is also set to be included as an object for notification.

In the right rearward neighboring region CBR, the angular range in which the relative movement direction is from 225° to 360° is set as the obstruction relative movement directional range that must be notified, and furthermore a stationary obstruction is also set to be included as an object for notification. And, in the right rearward normal region WBR, the angular range in which the relative movement direction is from 270° to 360° (i.e. 0°) is set as the obstruction relative movement directional range that must be notified. In the left rearward neighboring region CBL, the angular range in which the relative movement direction is from 0° to 135° is set as the obstruction relative movement directional range that must be notified, and furthermore a stationary obstruction is also set to be included as an object for notification. And, in the left rearward normal region WBL, the angular range in which the relative movement direction is from 0° to 90° is set as the obstruction relative movement directional range that must be notified. Moreover, in the right side neighboring region CR, the angular range in which the relative movement direction is from 180° to 315° is set as the obstruction relative movement directional range that must be notified; and, in the left side neighboring region CL, the angular range in which the relative movement direction is from 45° to 180° is set as the obstruction relative movement directional range that must be notified.

When the dump truck 1 is "stationary", among the sixteen notification candidate regions, eight notification candidate regions are set as notification object regions as shown by the hatching in Fig. 7, all of which are present in the immediate neighborhood of the dump truck 1: the forward neighboring region CF, the right forward neighboring region CFR, the left forward neighboring region CFL, the right side neighboring region CR, the left side neighboring region CL, the rearward neighboring region CB, the right rearward neighboring region CBR, and the left rearward neighboring region CBL. Moreover, in all these notification object regions, as shown in Fig. 7, the angular range in which the relative movement direction is from 0° to 360° is set as the obstruction relative movement directional range that must be notified, and furthermore a stationary obstruction is also set to be included as an object for notification.

As shown in Figs. 5 through 7, in the notification object regions, it is possible to change the range of the angle and so on according to the distance from the dump truck 1; in other words, it is possible to set weightings for when deciding whether an obstruction is to be notified. For example, as the angular ranges of the right rearward neighboring region CBR and the right rearward normal region WBR in Fig. 6 show, by setting the angular range of the obstruction relative movement direction that must be notified wider for regions that are closer to the dump truck 1, it is possible to establish a setting with which an obstruction that is present in regions closer to the dump truck 1 is easily determined as an object to be notified. The notification object setting unit 120 outputs to the determination unit 170 a notification object signal that specifies the notification object regions that have been set on the basis of the vehicle state signal and, for each of these notification object regions, the obstruction relative movement direction range that must be notified to the driver.

The obstruction detection unit 150 performs image processing on the basis of the plurality of sets of image data inputted from the front camera 21, the right side camera 22, the left side camera 23, and the rear camera 24, detects any obstruction that is present in the surroundings of the dump truck 1, and detects the relative position of such an obstruction that has been detected with respect to the dump truck 1. For example, a workman or a service vehicle may be included as an obstruction that may be present in the neighborhood of the dump truck 1.

On the basis of the plurality of sets of image data inputted from the cameras 21 through 24, the obstruction detection unit 150 is able to detect obstructions by a per se known image recognition technique. For example, if the obstruction is a moving body, then a specific region defined within the image data and corresponding to the obstruction is detected, and, by comparing together a plurality of sets of image data at different times, if this region moves to a different position, this region is detected as being a moving body. And, for example, if the obstruction is a stationary body, then a specific region defined within the image data and corresponding to the obstruction is detected, and the edges, luminance, color and so on of this region are considered as a whole, from which this region can be detected as being a stationary body.

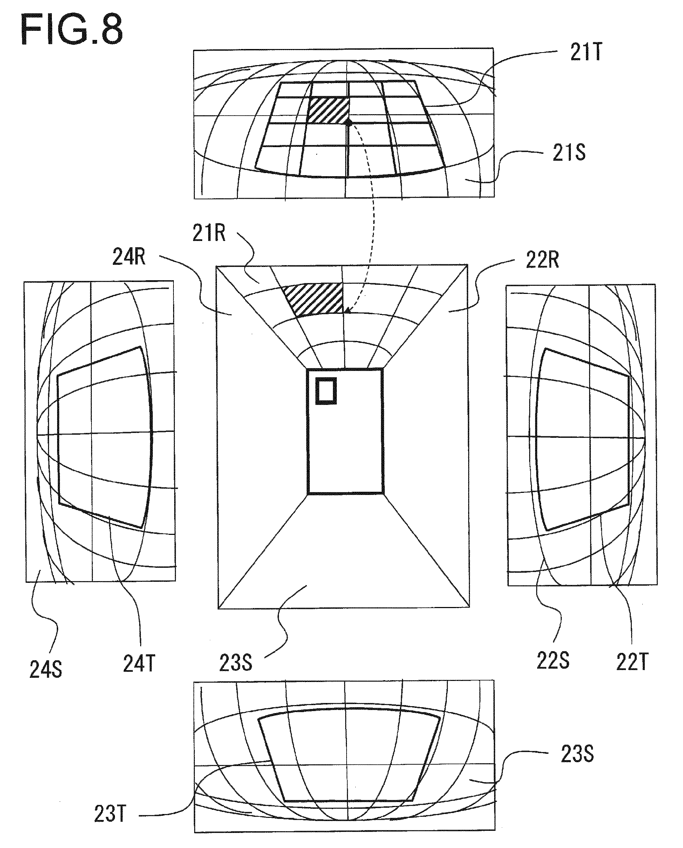

Next, the relative positions are obtained by using the bird's eye view image generation unit 130. Fig. 8 is a figure for explanation of bird's eye view image processing. Here, as shown in Fig. 8, input image regions 21T through 24T in the input image data 21S through 24S from the cameras 21 through 24 are converted by the bird's eye view image generation unit 130 into output images 21R through 24R by a geometry conversion map not shown in the figures. With reference to the geometry conversion map, geometrical conversion is performed upon the input image data 21S through 24S by pixel units, or by region units that consist of a plurality of pixels, so that the optical axis of the virtual point of view becomes vertical with the ground plane of the dump truck 1 taken as a virtual plane, and allocates the input image regions into the output image. Due to this geometry conversion map, as shown in Fig. 8, the portion, shown by the hatching, of the input image region 21T is allocated to the portion, shown by the hatching, of the output image. Next, from the positions of the pixels that have been detected as being an obstruction on the basis of the input image data from the cameras 21 through 24, the relative position is obtained by reverse calculation using the geometry conversion map.

Information detected by the obstruction detection unit 150 relating to the presence or absence of obstructions, and relating to the relative positions of any obstructions, is outputted to the movement direction determination unit 160 and to the determination unit 170.

The movement direction determination unit 160 stores the relative positions of obstructions that have been detected by the obstruction detection unit 150 over a predetermined time interval in the past. And the movement detection unit 160 detects the relative direction of movement of an obstruction with respect to the dump truck 1 by comparing together the relative position of the obstruction in the past and its newest relative position. Moreover, the movement direction determination unit 160 outputs information specifying the relative movement direction of an obstruction that has thus been detected to the determination unit 170.

On the basis of the relative position of the obstruction as detected by the obstruction detection unit 150 and the relative movement direction of the obstruction as detected by the movement direction determination unit 160, the determination unit 170 determines whether or not this obstruction is an obstruction for notification which must be notified to the driver. In concrete terms, the determination unit 170 compares the relative position and the relative movement direction of the obstruction with the notification object region and the angular range of the obstruction relative movement direction to be notified that have been set by the notification object setting unit 120. And, if the relative position of the obstruction that has been detected is present within the notification object region, and moreover the obstruction relative movement direction that has been detected is within the angular range of obstruction relative movement direction that must be notified, then the determination unit 170 decides that this obstruction is an obstruction that must be notified. It should be understood that, as previously described, in one or more portions of the notification object region, a stationary obstruction may also be determined as being an object for notification. The result of the decision by the determination unit 170 is outputted to the output control unit 180.

Next, the control for generation of the bird's eye view image (i.e. the virtual viewpoint image) performed by the controller 105 of this surroundings monitoring device 100 will be explained.

As previously described, the plurality of sets of image data inputted from the front camera 21, the right side camera 22, the left side camera 23, and the rear camera 24 are inputted to the bird's eye view image generation unit 130. And the bird's eye view image generation unit 130 generates a virtual viewpoint image on the basis of this image data that has been inputted.

Furthermore, the bird's eye view image generation unit 130 combines a front virtual viewpoint image 21R on the basis of the image data of the front camera 21, a right side virtual viewpoint image 22R on the basis of the image data of the right side camera 22, a left side virtual viewpoint image 23R on the basis of the image data of the left side camera 23, and a rear virtual viewpoint image 24R on the basis of the image data of the rear camera 24, and, as shown in Fig. 3, generates the virtual viewpoint image 20R that corresponds to a bird's eye view image of the entire surroundings of the dump truck 1. This virtual viewpoint image 20R that has been generated by the bird's eye view image generation unit 130 is outputted to the output control unit 180.

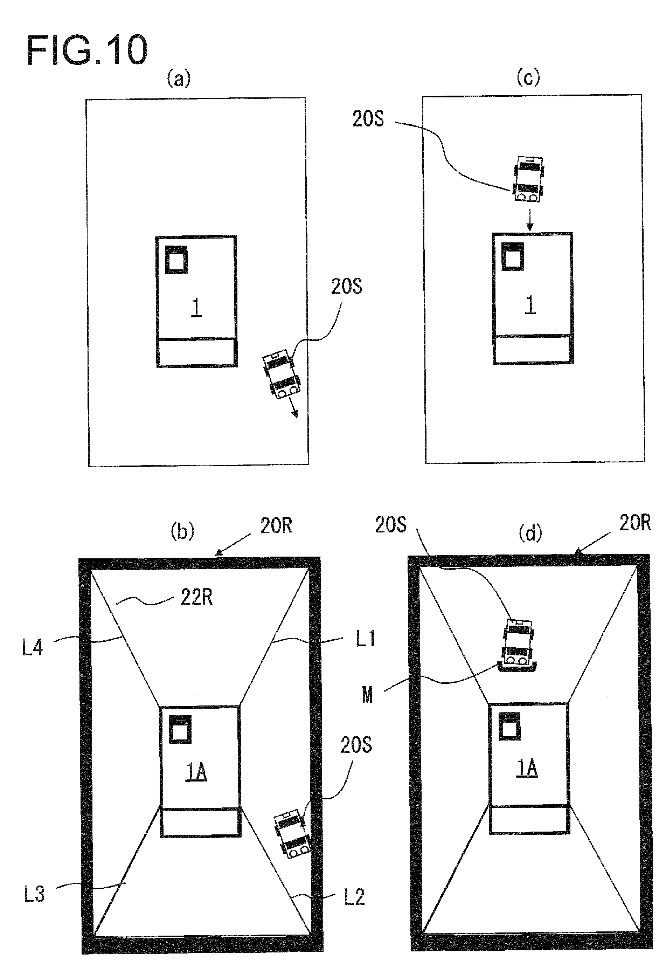

The output control unit 180 includes a display control unit 181 that controls images to be displayed upon the display monitor of the display device 50. This display control unit 181 controls the image to be displayed upon the display monitor according to the virtual viewpoint image 20R of the entire surroundings of the dump truck 1 inputted from the bird's eye view image generation unit 130, and according to the decision results inputted from the determination unit 170. In concrete terms, the display control unit 181 displays the virtual viewpoint image 20R of the entire surroundings of the dump truck 1 upon the display monitor. Moreover, if the determination unit 170 has decided that some obstruction for notification is present, then, in order to notify the driver that this obstruction for notification is present, an identification mark for accentuating the obstruction for notification is displayed as superimposed upon the virtual viewpoint image 20R. A concrete example of such a display will be described hereinafter with reference to Fig. 10.

The virtual viewpoint image of the entire surroundings of the dump truck 1 is displayed upon the display monitor of the display device 50 according to a signal from the controller 105, and, if an obstruction for notification is present, then, in order to notify the driver that this obstruction for notification is present, the abovementioned identification mark for accentuating this obstruction for notification is also displayed on the display monitor. The virtual viewpoint image and the identification mark that are displayed upon the display monitor are repeatedly updated on the basis of the image data inputted from the imaging device 20.

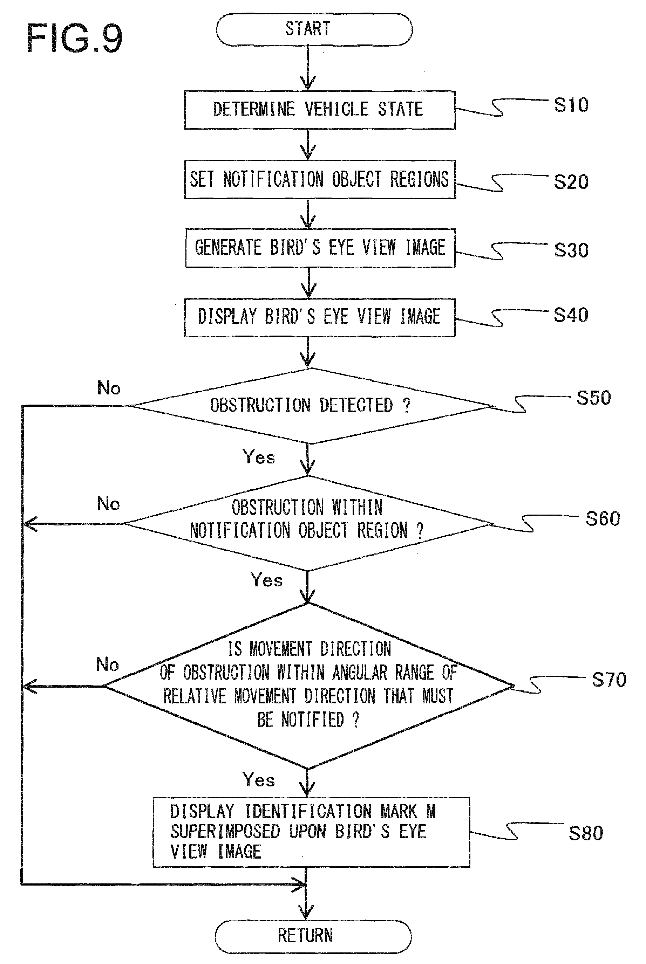

In the following, the details of the operation of this surroundings monitoring device 100 according to the first embodiment will be explained with reference to Fig. 9.

Fig. 9 is a flow chart showing the processing sequence of a surroundings monitoring control procedure that is executed by the controller 105 of the first embodiment. The steps of this processing are continuously performed at fixed intervals.

First in step S10 the vehicle state determination unit 110 determines the vehicle state of the dump truck 1 on the basis of the signals that are inputted from the shift lever 30 and from the brake operating member 40. Here, by way of example, a case will be explained in which it is decided that the vehicle state of the dump truck 1 is "preparing to move forward".

Next in step S20, according to the vehicle state of the dump truck 1 that was determined in the previous step S10, the notification object setting unit 120 sets notification object regions within which obstructions that are present must be notified to the driver, and angular ranges for relative movement directions of obstructions that must be notified to the driver. Here, since the vehicle state of the dump truck 1 is "preparing to move forward", the eight notification candidate regions CF, WF, CFR, WFR, CFL, WFL, CR, and CL shown in Fig. 5 are set as notification object regions, and also the corresponding angular ranges for relative movement direction of an obstruction that must be notified are set.

Then in step S30, on the basis of the plurality of sets of image data that have been inputted from the front camera 21, the right side camera 22, the left side camera 23, and the rear camera 24, the bird's eye view image generation unit 130 generates the virtual viewpoint image 20R (i.e. the bird's eye view image) of the entire surroundings of the dump truck 1.

And then, in step S40, the display control unit 181 displays the virtual viewpoint image 20R that has been generated in step S30 upon the display monitor of the display device 50. Examples of situations in the surroundings of the dump truck 1 and of the corresponding virtual viewpoint images displayed upon the display monitor are shown in Figs. 10(a) through 10(d). In the case of a surrounding situation such as shown in Fig. 10(a), although a service car 20S is present within the notification region that corresponds to the virtual viewpoint image 20R, since the relative position of this service car 20S does not correspond to a notification object region for "preparing to move forward", accordingly it is decided that this service car 20S is not an obstruction for notification. Therefore, only the virtual viewpoint image 20R is displayed upon the display monitor, as shown in Fig. 10(b).

It should be understood that an illustration 1A corresponding to the dump truck 1 is displayed in the central portion of the virtual viewpoint image 20R in Fig. 10(b). Moreover, boundary lines L1, L2, L3, and L4 that show the boundaries of the image data captured by the cameras 21 through 24 in the virtual viewpoint image 20R are also displayed on the display monitor. By displaying the virtual viewpoint image 20R, the photographic subjects that are captured by the cameras 21 through 24 are displayed upon the display monitor at the directions and positions (i.e. distances) that they are actually present if seen from above with the dump truck 1 as a center. In the display example shown in Fig. 10(b), the service car 20S that is present to the right side rear of the dump truck 1 is displayed at a position that corresponds to the direction and to the position at which it is actually present, taking the dump truck 1 as a center.

Next in step S50 the determination unit 170 decides whether or not at least one obstruction has been detected by the obstruction detection unit 150. If the result of the decision in the step S50 is affirmative and therefore an obstruction has been detected, then the flow of control proceeds to step S60, whereas, if the decision result is negative so that no obstruction has been detected, then the flow of control returns from this routine.

In step S60, the determination unit 170 makes a decision as to whether or not the relative position of the obstruction that has been detected by the obstruction detection unit 150 is present within a notification object region in the virtual viewpoint image 20R. If the relative position of the obstruction is located within the notification object region, then the flow of control proceeds to step S70, whereas if it is not located within the notification object region then the flow of control returns.

In step S70, for the obstruction that was determined in step S60 to be present within the notification object region, the determination unit 170 makes a decision as to whether or not its relative direction of movement is within the angular range of relative direction of movement for that notification object region in the virtual viewpoint image 20R for which it is necessary to issue a notification. If the obstruction relative movement direction is within the angular range of relative movement direction for which a notification must be issued, then this obstruction is determined to be an obstruction for notification and the flow of control proceeds to step S80, whereas if it is outside that angular range then the flow of control returns.

In step S80, in order to notify the driver of the presence of an obstruction that has been determined in step S70 to be an obstruction for notification, the display control unit 181 controls the display device 50 so as to display this obstruction for notification in an accentuated manner. In concrete terms, in the case of a surrounding situation such as shown in Fig. 10(c), a service car 20S is present within a notification region that corresponds to the virtual viewpoint image 20R. Since the relative position and the relative direction of movement of this service car 20S correspond to a notification object region and to a relative movement direction that must be notified in the case of "preparing to move forward", accordingly this service car 20S is determined to be an obstruction that must be notified.

Therefore, as shown in Fig. 10(d), in order to notify the driver that an obstruction for notification (in this case, the service car 20S) is present, in addition to displaying the virtual viewpoint image 20R, an identification mark M is displayed upon the display monitor as superimposed upon the virtual viewpoint image 20R. In concrete terms, the identification mark M is displayed as superimposed at a position in the virtual viewpoint image 20R corresponding to the obstruction for notification, so that the obstruction for notification is visually accentuated in the virtual viewpoint image 20R. Due to this, the service car 20S that is present in front of the dump truck 1 is displayed upon the display monitor at a position that corresponds to the direction and position at which it is actually present, taking the dump truck 1 as a center, and is visually accentuated. After this step, the processing of this cycle terminates and the flow of control returns.

It should be understood that, in the display example shown in Fig. 10(d), a line segment of the service car 20S that is closest to the camera that captured the image of the service car 20S (here, the front camera 21) is detected, and the identification mark M is provided by displaying this line segment as accentuated or emphasized in the virtual viewpoint image 20R. However, this should not be considered as being limitative; provided that the obstruction to be notified is displayed as being visually accentuated, any identification mark of various types could be employed, such as a circle, a square, a triangle, or the like, or an arrow sign or the like that specifies the direction of movement of the obstruction for notification. Moreover, as well as this notification issued via the display, it would also be acceptable to arrange to issue an auditory notification via a buzzer or the like not shown in the figures.

In this manner, with the first embodiment explained above, it is possible to obtain the following operations and advantages.
(1) The surroundings monitoring device 100 includes the imaging device 20 that captures images of the surroundings of the dump truck 1, the bird's eye view image generation unit 130 that performs point of view conversion upon the images acquired by the imaging device 20 to convert to a point of view from above so as to generate a virtual viewpoint image, and the display control unit 118 that displays this virtual viewpoint image that has been generated by the bird's eye view image generation unit 130 upon the display device 50. And this surroundings monitoring device 100 further includes the obstruction detection unit 150 that detects obstructions present in the surroundings of the dump truck 1, the movement direction determination unit 160 that detects the relative direction of movement with respect to the dump truck 1 of an obstruction that has been detected by the obstruction detection unit 150, and the determination unit 170 that, on the basis of this obstruction relative movement direction, decides that this obstruction is an obstruction for notification of which the driver of the dump truck 1 must be notified, if the relative movement direction of the obstruction is within a predetermined angular range of movement direction or the like. Here, since the decision as to whether or not an obstruction that is present in the surroundings of the dump truck 1 is an obstruction to be notified to the driver is made on the basis of the relative movement direction of the obstruction, accordingly it is possible to make this determination of an obstruction for notification of which the driver must be notified in an appropriate manner. In case where an obstruction has been detected but it is moving away from the dump truck 1, if the driver is always notified of the presence of such an obstruction, the driver may be annoyed by the notification. Accordingly, by deciding that an obstruction that has been detected is an obstruction to be notified only if the direction of relative movement of that obstruction is within a predetermined angular range of movement direction or the like, it is possible to determine in an appropriate manner that such an obstruction is an obstruction, the presence of which must be notified to the driver, such as for example an obstruction that is approaching to the dump truck 1 or the like. Moreover, since a large sized dump truck 1 has a very great body width, and the driver's cab is installed on the left side of the body, accordingly it is particularly difficult from the point of view of the driver to check the right side of the truck or behind the truck by visual inspection; but, by displaying a virtual viewpoint image of the surroundings of the dump truck 1 upon the display monitor, it is possible for the driver instantaneously to ascertain the positional relationship between an obstacle that is present in the surroundings of the dump truck 1, and the dump truck 1.
(2) The surroundings monitoring device 100 detects the position of an obstruction with respect to the dump truck 1 by using the obstruction detection unit 150. And the surroundings monitoring device 100 further includes the vehicle state determination unit 110 that detects the vehicle state of the dump truck 1 and the notification object setting unit 120 that sets the notification object regions according to this vehicle state. A determination is made as to which vehicle state the dump truck 1 is in, in concrete terms as to which of the states "moving forward", "preparing to move forward", "moving rearward", "preparing to move rearward", and "stationary" the dump truck 1 is in, and the notification object regions for determining obstructions for notification are set as shown in Figs. 5 through 7, according to this vehicle state (i.e. this operational state) that has been determined. And furthermore, if an obstruction is present within a notification object region that has been set in the surroundings of the dump truck 1, then the determination unit 170 decides that this is an obstruction that must be notified. For example, if the dump truck 1 is moving forward, then the regions behind the dump truck 1 and diagonally rearward are excluded from the notification object regions (refer to Fig. 5), since it is considered that an obstruction that is present behind the dump truck 1 is getting further away from it. Due to this, appropriate notification object regions are set according to the vehicle state of the dump truck 1, so that it becomes possible to determine only obstructions that really need to be notified to the driver as obstructions for notification in an appropriate manner.
(3) The notification object setting unit 120 changes the angular ranges or the like in the notification object regions according to the distance from the dump truck 1; in other words, the weighting settings can be changed when determining whether or not an obstruction should be notified to the driver. In other words, a larger weighting is set for a notification object region that is closer to the dump truck 1, so that it becomes easier to decide that an obstruction present in that notification object region is an obstruction for notification. In concrete terms, the angular range of the direction of relative movement of an obstruction to be notified to the driver is set to be wider for a region closer to the dump truck 1. For example, in the case of moving rearward shown in Fig. 6, the angular range of relative movement direction of the right rearward neighboring region CBR for which an obstruction is to be notified to the driver is set to be wider than that of the right rearward normal region WBR. Due to this, it becomes easier for an obstruction that is present in the region CBR which is closer to the dump truck 1 to be determined as being an obstruction for notification than an obstruction that is present in the region WBR that is further from the dump truck 1. By doing this, it is possible to determine obstructions for which the necessity of notifying the driver is higher.
(4) The surroundings monitoring device 100 also includes the display control unit 181 that, if it has been determined by the determination unit 170 that an obstruction is one that must be notified to the driver, notifies the driver of the presence of that obstruction. This display control unit 181 functions as a notification unit that notifies the driver of the existence of an obstruction that must be notified by displaying the obstruction upon the display monitor in an accentuated manner. Due to this, it is possible to notify the driver in a reliable manner, via visual information, of the existence of an obstruction for notification that has been accurately determined as the obstruction necessary to be notified to the driver.

### Second Embodiment

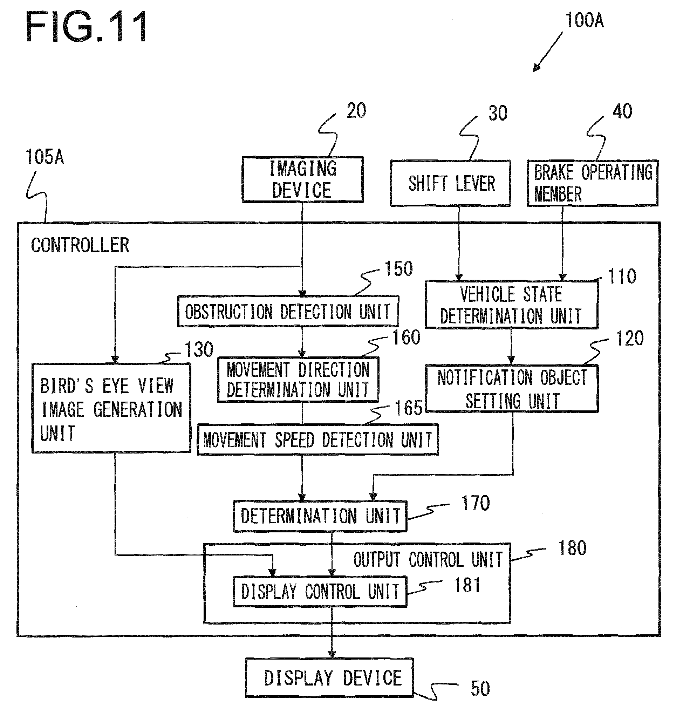

Fig. 11 is a block diagram showing the structure of a surroundings monitoring device 100A according to a second embodiment of the present invention. In Fig. 11, to elements having similar functions to elements of the first embodiment, the same reference symbols are appended. In the following, the explanation will principally concentrate upon the features of difference from the first embodiment described above.

In the first embodiment described above, whether or not an obstruction was an obstruction for notification was determined on the basis of the relative position and the relative direction of movement of that obstruction. However, in this second embodiment, whether or not an obstruction is an obstruction for notification is determined on the basis of the speed of movement of that obstruction, in addition to the relative position and the relative direction of movement of that obstruction. In concrete terms, if an obstruction is approaching the dump truck 1, the higher the approach speed of that obstruction is, the greater is the importance of notifying the driver of the existence of that obstruction. Accordingly, in this second embodiment, the movement speed of the obstruction is also taken into account, and thereby it becomes possible to determine at an early stage and in an appropriate manner that the obstruction is one that must be notified to the driver.

Accordingly, a controller 105 A of this surroundings monitoring device 100A further includes a movement speed detection unit 165. This movement speed detection unit 165 stores the relative positions of obstructions that have been detected by the obstruction detection unit 150 during a predetermined time interval in the past, and detects the movement speed of an obstruction on the basis of the distance between the past relative position of that obstruction and its newest relative position, and the predetermined time interval. The movement speed detection unit 165 outputs the movement speed of any obstruction that it has detected to the determination unit 170.

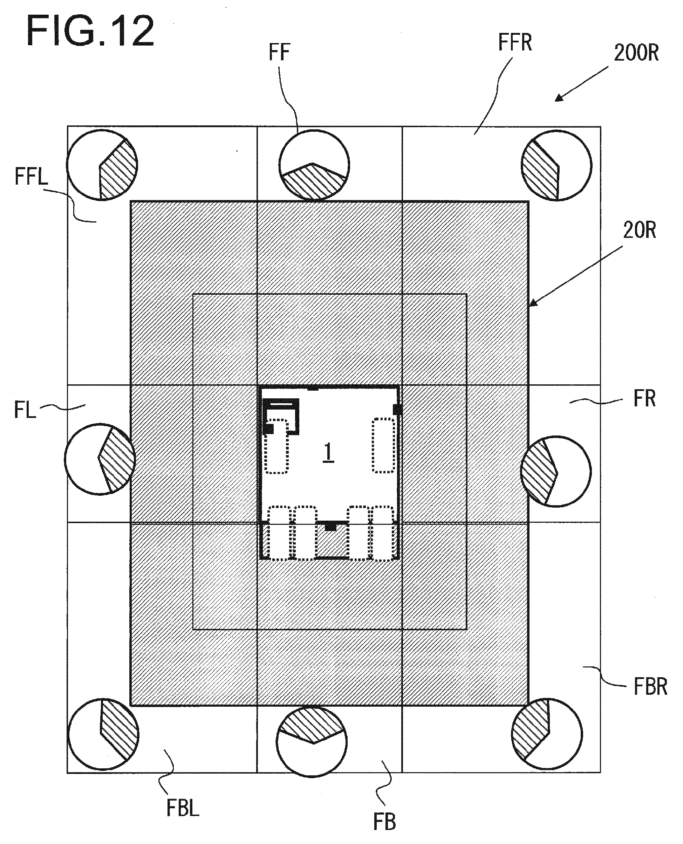

In order to be able to determine in an appropriate manner from an early stage whether an obstruction is one that must be notified to the driver while also taking the movement speed of the obstruction into account, the imaging range of the imaging device 20 of this surroundings monitoring device 100A is made to be wider than in the case of the first embodiment, so that it is possible to detect obstructions in more distant regions. Fig. 12 is a figure for explanation of the imaging range (also termed the "notification region") in this second embodiment. Fig. 12 is a plan view of the dump truck 1 and its surroundings, and corresponds to the virtual viewpoint image in which the sets of image data captured by the cameras 21 through 24 are combined.

As shown in Fig. 12, the notification region 200R in this second embodiment is set to be larger and so as to extend further out than the notification region 20R that was set in the first embodiment. In addition to the neighboring regions and the normal regions nearer the dump truck 1, this notification region 200R includes eight more distant regions, these being: in front of the dump truck 1, to its right, to its left, behind it, to its right front, to its left front, to its right rear, and to its left rear. Due to this, the notification region 200R around the entire surroundings of the dump truck 1 consists of a total of 24 notification candidate regions. The neighboring regions may be set to a range of around 4 meters from the external periphery of the dump truck 1, the normal regions may be set to a range of around 8 meters from the external periphery of the dump truck 1, and the distant regions may be set to a range of around 12 meters from the external periphery of the dump truck 1, although this does not quite agree with the way in which they are shown in Fig. 12. It should be understood that the ranges of the neighboring regions, the normal regions, and the distant regions are not limited to these values.

For the notification region 20R shown by hatching, in other words for the neighboring region and the normal region of the dump truck 1, the notification object setting unit 120 sets the notification object regions in a similar manner to the case in the first embodiment described above, irrespective of the movement speed of any obstruction. In concrete terms, on the basis of the vehicle state of the dump truck 1 inputted from the vehicle state determination unit 110, the notification object setting unit 120 sets notification object regions for which an obstruction that is present must be notified to the driver, and also sets ranges of angle or the like (here termed "angular ranges") for the relative movement direction of an obstruction in these notification object regions that must be notified to the driver.

And, for the distant regions FF, FFR, FFL, FR, FL, FB, FBR, and FBL that are located further from the notification region 20R, the notification object setting unit 120 sets all these distant regions as notification object regions, irrespective of the vehicle state of the dump truck 1. Moreover, for each of these distant regions, irrespective of the vehicle state of the dump truck 1, the general direction of approaching toward the dump truck 1 in each distant region is set as a range of angle or the like (here termed "angular range") for the relative movement direction of an obstruction that must be notified to the driver.

The determination unit 170 determines whether or not an obstruction that has been detected by the obstruction detection unit 150 is an obstruction for notification, on the basis of the relative position of the obstruction, the relative movement direction of the obstruction detected by the movement direction determination unit 160, and the movement speed of the obstruction inputted from the movement speed detection unit 165. In concrete terms, for an obstruction that is present in one of the distant regions FF, FFR, FFL, FR, FL, FB, FBR, and FBL, the determination unit 170 determines that the obstruction is an obstruction for notification if the approach speed of the obstruction toward the dump truck 1 is greater than or equal to a predetermined value (for example, 20 km/h).

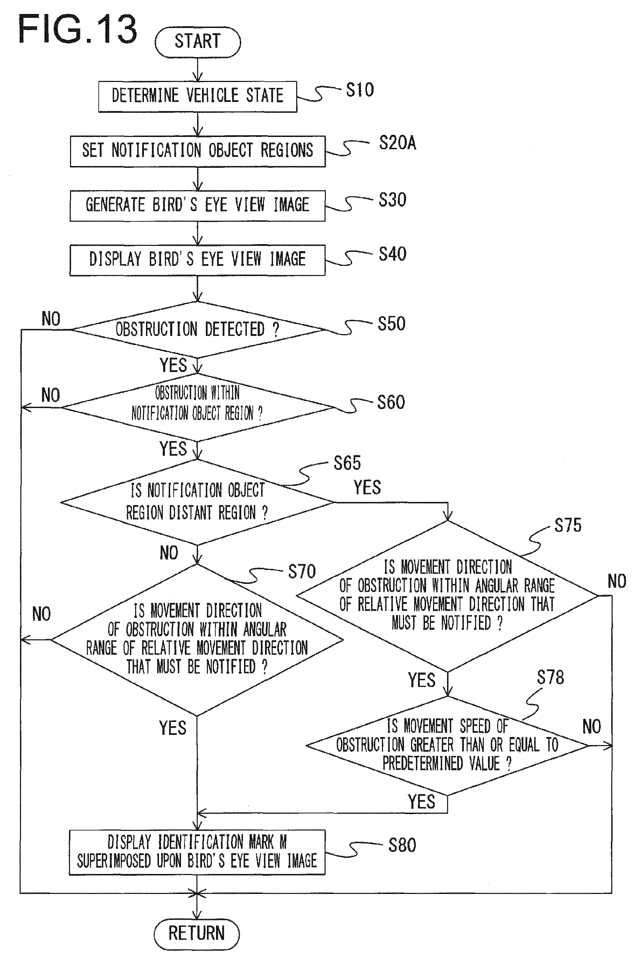

In the following, the operation of this surroundings monitoring device 100A according to the second embodiment will be explained with reference to the flow chart of Fig. 13. The control procedure shown in Fig. 13 is repeatedly executed by the controller 105art fixed intervals.

First, in step S10, the vehicle state determination unit 110 determines the vehicle state of the dump truck 1, in a similar manner to the case in the first embodiment described above.

Then in step S20A, as described above, on the basis of the vehicle state of the dump truck 1, the notification object setting unit 120 sets notification object regions for which it is necessary to notify the driver of the presence of obstructions, and directions of relative movement of obstructions that must be notified to the driver.

The processing of steps S30 through S60 is the same as in the case of the first embodiment described above and explained with reference to Fig. 9. And then, in step S65, a decision is made by the determination unit 170 as to whether or not the position of the obstruction is located within one of the distant regions FF, FFR, FFL, FR, FL, FB, FBR, or FBL shown in Fig. 12. If the result of the decision in this step S65 is negative, then the flow of control is transferred to step S70. The processing of the steps S70 and S80 is the same as in the case of the first embodiment described above.

But if an affirmative decision is reached in step S65, and the position of the obstruction is located within one of the distant regions FF, FFR, FFL, FR, FL, FB, FBR, or FBL, then the flow of control is transferred to step S75. In this step S75, for each distant region, the determination unit 170 makes a decision as to whether or not the direction of relative movement of an obstruction that is present in that distant region is within the angular range of relative movement direction that must be notified to the driver. And if the direction of relative movement of the obstruction is within the angular range of relative movement direction that must be notified, and accordingly the obstruction is approaching toward the dump truck 1, then the flow of control is transferred to step S78.

In this step S78, the determination unit 170 makes a decision as to whether or not the movement speed of the obstruction is greater than or equal to a predetermined value (for example 20 km/h). If the result of the decision in step S78 is affirmative, so that the obstruction is approaching the dump truck 1 at a speed that is greater than or equal to the predetermined value, then it is determined that this obstruction is an obstruction that must be notified to the driver, and the flow of control is transferred to step S80. But if a negative decision is reached in step S75 or in step S78, then the flow of control returns from this routine.

In this manner, with the second embodiment as explained above, the following further beneficial operational effect can be obtained, in addition to the beneficial effects obtained according to the first embodiment described above.

Since this surroundings monitoring device 100A determines whether or not an obstruction is an obstruction for notification on the basis of the speed of movement of that obstruction, in addition to the relative position and the relative direction of movement of that obstruction, accordingly it becomes possible to notify the driver if, for example, some obstruction is approaching the dump truck at a high speed or the like. Moreover, since an obstruction whose speed of movement is high is determined as being an obstruction that must be notified to the driver even if it is present in one of the distant regions FF, FFR, FFL, FR, FL, FB, FBR, or FBL, accordingly it is possible to inform the driver at an early stage of the existence of an obstruction that is approaching at a high speed.

It should be understood that it would also be acceptable to arrange to set an identification mark or a buzzer sound, according to the speed of movement of the obstruction for notification. For example, in the case of an identification mark, it would be possible to change the color of that mark according to the speed of the obstruction, or to change the period at which the mark blinks according to the speed; or, in the case of a buzzer sound, it would be possible to change the magnitude of the sound according to the speed, or to change the tone of the sound.

### Variant of Second Embodiment

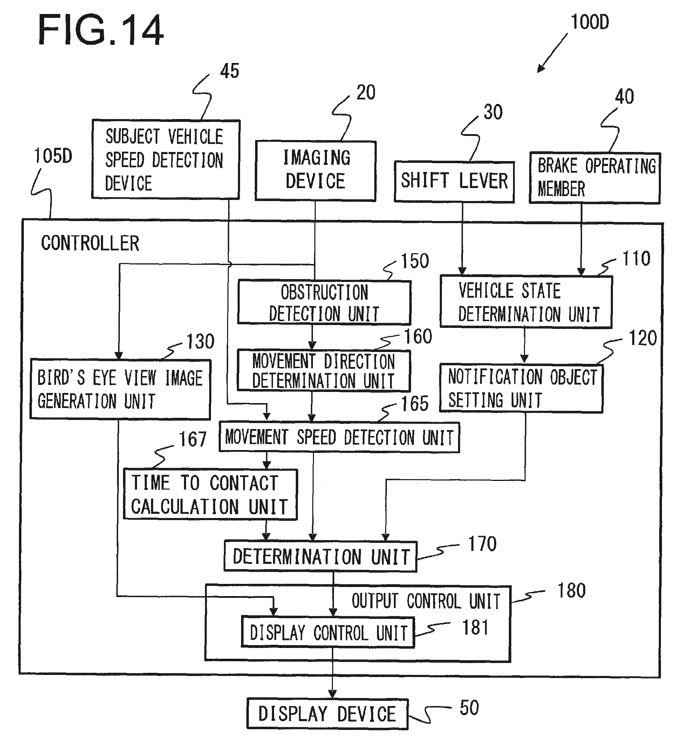

Fig. 14 is a block diagram showing the structure of a surroundings monitoring device 100D according to a variant of the second embodiment of the present invention. In Fig. 14, to elements having similar functions to elements of the second embodiment, the same reference symbols are appended. In the following, the explanation will principally concentrate upon the features of difference from the second embodiment described above.

In the second embodiment described above, a decision was made as to whether or not an obstruction was an obstruction to be notified to the driver on the basis of the movement speed of that obstruction, in addition to the position of the obstruction relative to the subject vehicle and its relative direction of movement. However, in a variant of this second embodiment, the decision as to whether or not the obstruction is an obstruction to be notified to the driver is performed on the basis of the predicted time period until the subject vehicle and the obstruction come into mutual contact (hereinafter this is sometimes also termed the "time to contact"). In concrete terms, the shorter the time to contact is, the higher is the importance of notifying the driver of the existence of the obstruction. Accordingly, as a variant of the second embodiment, the time to contact is also taken into account, and thereby it is arranged to determine whether an obstruction is one that must be notified to the driver at an early stage in an appropriate manner.

Thus, this surroundings monitoring device 100D further includes a subject vehicle speed detection device 45 and a time to contact calculation unit 167. The subject vehicle speed detection device 45 is provided to the front wheels 3R, 3L or to the rear wheels 4R, 4L, and is a speed sensor that detects the rotational speed of the vehicle wheel and outputs the rotational speed that it has detected to the movement speed detection unit 165. Moreover, the time to contact calculation unit 167 calculates the time to contact from the relative position of the subject vehicle and the obstruction, the direction of their relative movement, and the movement speeds of the subject vehicle and the obstruction outputted by the movement speed detection unit 165. As one example of this time to contact calculation, the time to contact may be obtained by dividing the relative distance, which is obtained from the relative positions of the subject vehicle and the obstruction, by the relative movement speed of the subject vehicle and the obstruction, which is obtained from the speeds of the subject vehicle and of the obstruction and the direction of relative movement of the subject vehicle and the obstruction. The time to contact calculation unit 167 outputs this time to contact that has been calculated to the determination unit 170.

The determination unit 170 compares together the time to contact outputted from the time to contact calculation unit 167 and a predetermined time interval threshold value, and determines that an obstruction that must be notified is present if the time to contact is less than or equal to the predetermined time interval threshold value. For example, if the predetermined time interval threshold value is set to 5 seconds, then it is determined that this obstruction is an obstruction that must be notified if the time to contact is less than or equal to 5 seconds.

Since, with this variant of the second embodiment explained above, the surroundings monitoring device 100D also makes the decision as to whether or not an obstruction is one that must be notified to the driver on the basis of the predicted time to contact between the subject vehicle and the obstruction, accordingly, in addition to the beneficial effects obtained with the first embodiment described above, it also becomes possible to notify the driver if the time to contact with the obstruction is short.

### Third Embodiment

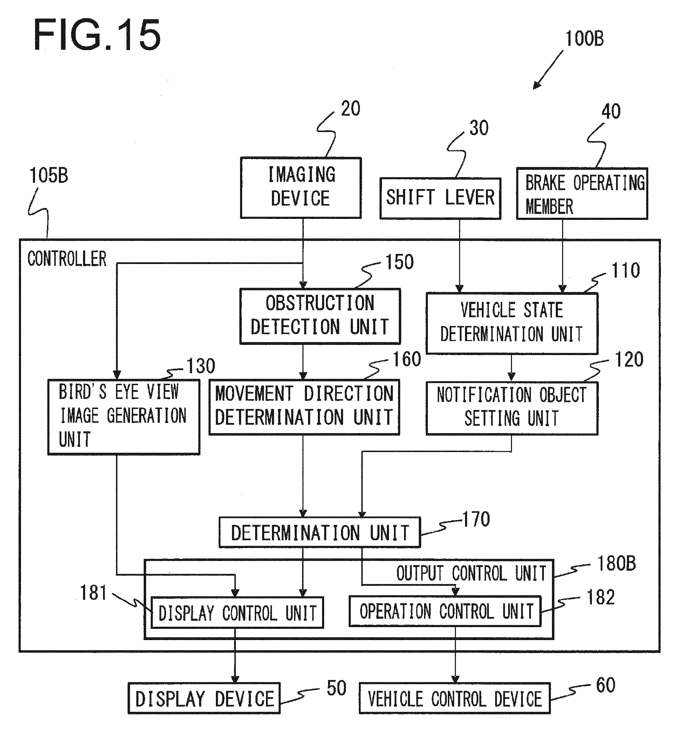

Fig. 15 is a block diagram showing the structure of a surroundings monitoring device 100B according to a third embodiment of the present invention. In Fig. 15, to elements having similar functions to elements of the first embodiment, the same reference symbols are appended. In the following, the explanation will principally concentrate upon the features of difference from the first embodiment described above.

In the first embodiment described above, the presence of an obstruction for notification was notified to the driver by visually accentuating the obstruction for notification. However, in this third embodiment, if an obstruction that must be notified is present, in addition to visual notification, a limitation is imposed upon the traveling operation of the dump truck 1. In concrete terms, if an obstruction that must be notified is present, the dump truck 1 is decelerated or stopped if it is moving, while, if the dump truck 1 is stationary, it is prevented from starting off from rest.

Accordingly, in a controller 105B of this surroundings monitoring device 100B according to the third embodiment, an output control unit 180B is additionally provided with an operation control unit 182. If it is determined by the determination unit 170 that an obstruction is present whose existence must be notified to the driver, then this operation control unit 182 transmits a signal to a vehicle control device 60 of the dump truck 1, so as to limit the traveling operation of the dump truck 1 according to the vehicle state of the dump truck 1.

The vehicle control device 60 is arranged to control the braking device of the dump truck 1 so as to decelerate or stop the dump truck 1 if the dump truck 1 is moving (i.e. if it is moving forward or moving rearward); and to prevent the dump truck 1 from starting off from rest if the dump truck 1 is not moving (i.e. if it is preparing to move forward, or is preparing to move rearward, or is stationary). It would also be acceptable to arrange for the vehicle control device 60 to prevent the dump truck 1 from starting off from rest by controlling the drive system of the dump truck 1.

In this manner, with the third embodiment as explained above, in addition to the beneficial effects obtained with the first and second embodiments described above, the following beneficial operational effect can also be obtained.

The surroundings monitoring device 100B includes the operation control unit 182 that limits the traveling operation of the dump truck 1 if it has been determined by the determination unit 170 that an is one that must be notified to the driver. And, if such an obstruction that must be notified is present, then it becomes possible to avoid in advance the risk of contact or the like with that obstruction by decelerating, stopping, or preventing the starting off of the dump truck 1. Moreover since, as described above, it is determined in an appropriate manner whether or not the obstruction is an obstruction that must be notified to the driver, accordingly it becomes possible only to limit the traveling operation of the dump truck 1 when it is really necessary to do so, so that the driver is not given any unnecessary trouble.

### Fourth Embodiment

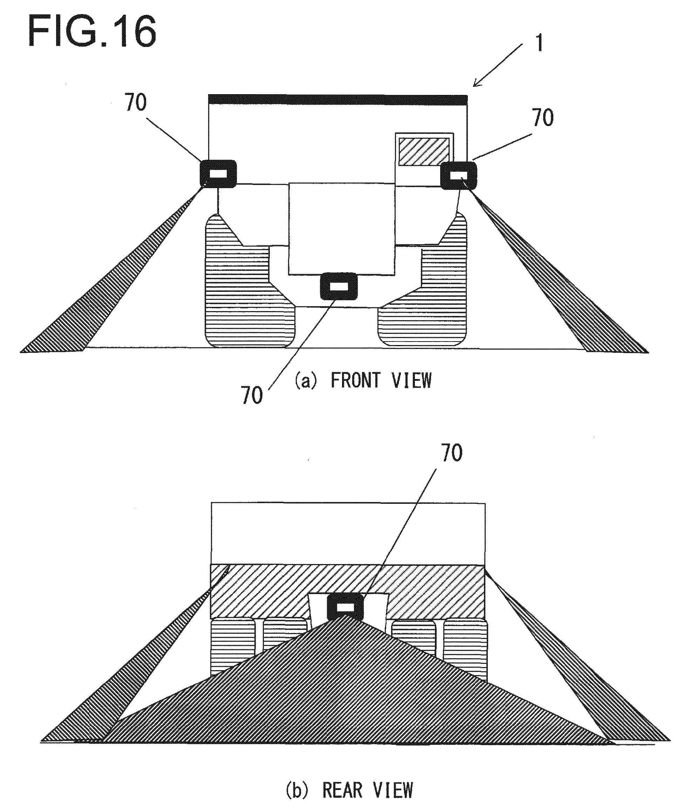

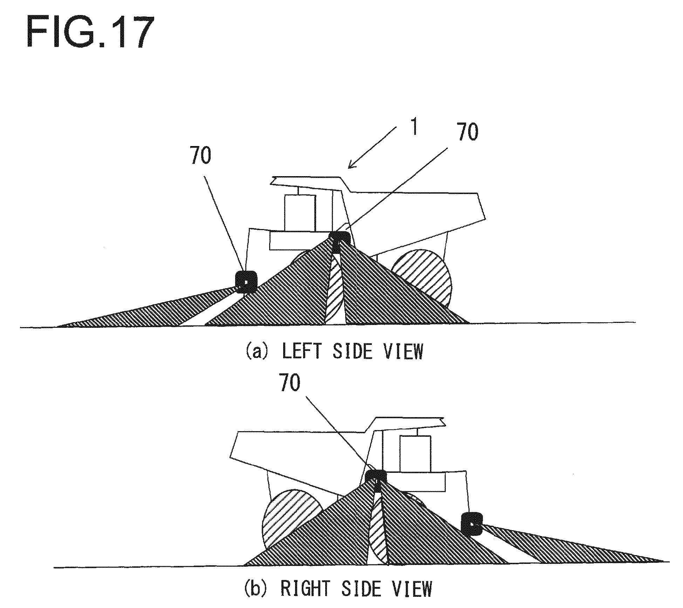

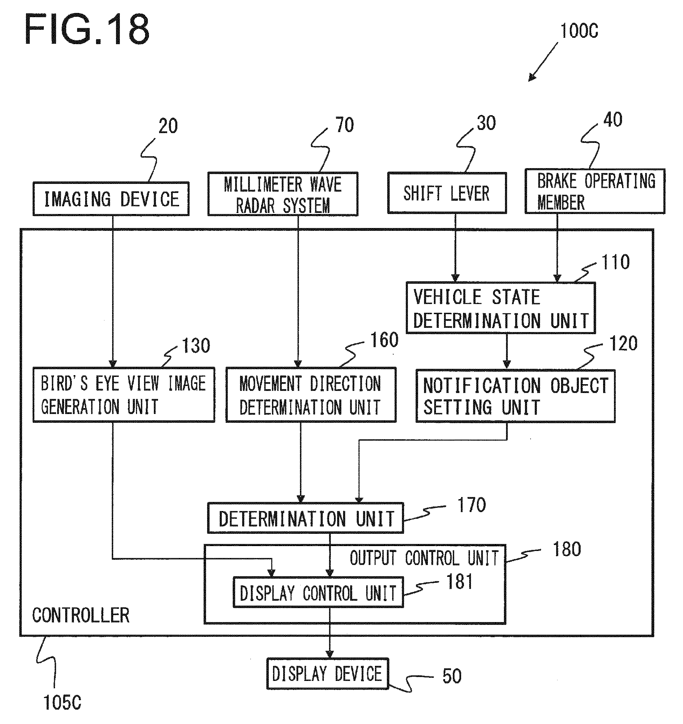

Figs. 16(a) and 16(b) are respectively a front view and a rear view of a dump truck 1 according to a fourth embodiment of the present invention, showing positions at which a millimeter wave radar system 70 is mounted; and Figs. 17(a) and 17(b) are respectively a left side view and a right side view of this dump truck 1 according to the fourth embodiment of the present invention, showing other positions at which the millimeter wave radar system 70 is mounted. Moreover, Fig. 18 is a block diagram showing the structure of a surroundings monitoring device 100C according to this fourth embodiment of the present invention. In Fig. 18, to elements having similar functions to elements of the first embodiment, the same reference symbols are appended. In the following, the explanation will principally concentrate upon the features of difference from the first embodiment described above.

While, in the first embodiment, an obstruction present in the surroundings of the dump truck 1 was detected on the basis of image captured by the imaging device 20, in this fourth embodiment, such an obstruction is detected by using a relative distance detection means that detects the relative distance to the obstruction.

Accordingly, the surroundings monitoring device 100C of this fourth embodiment is provided with a millimeter wave radar system 70 that serves as a relative distance detection means. Figs. 16(a), 16(b), 17(a), and 17(b) show examples of the millimeter wave radar system 70 mounted to surfaces of the dump truck 1 on its front, its rear, its left side, and its right side. It should be understood that the hatched portions show the detection range of this system 70. Relative distance signals detected by this millimeter wave radar system 70 are inputted to the movement direction determination unit 160 and to the determination unit 170 of a controller 105C. It should be understood that since, in this fourth embodiment, obstructions are detected by the millimeter wave radar system 70, accordingly the controller 105C is not provided with the obstruction detection unit 150. The determination unit 170 makes a decision as to whether or not an obstruction that has been detected is an obstruction whose presence must be notified to the driver, on the basis of the relative distance signal detected by the millimeter wave radar system 70 and on the basis of the movement direction of the obstruction as detected by the movement direction determination unit 160, in a similar manner to the case of the first embodiment described above.

In this manner, with the fourth embodiment as explained above, in addition to the beneficial effects obtained with the first through third embodiments described above, the following beneficial operational effect can also be obtained.

Since the millimeter wave radar system 70 has the advantage of being capable of detecting obstructions reliably even in rain or fog, accordingly it becomes possible to detect an obstruction in a reliable manner, even in circumstances in which it would not be possible to detect the obstruction accurately from image data produced by the imaging device 20.

### Variant Embodiments

(1) With the first through the fourth embodiments explained above, when it has been determined by the determination unit 170 that an obstruction that must be notified is present, it is arranged to notify this information to the driver, and/or to limit the operation of the dump truck 1 on the basis of this information. However, this is not to be considered as being limitative; for example, it would also be possible to omit the display device 50 and/or the vehicle control device 60, and to adapt the surroundings monitoring device as a device that monitors the surroundings of the dump truck 1, and that makes a decision as to whether or not any obstruction for notification is present.
(2) With the first through the fourth embodiments explained above, when it has been determined by the determination unit 170 that an obstruction that must be notified is present, it is arranged to notify the driver of this information visually by displaying the existence of the obstruction for notification upon the display monitor in an accentuated manner; but this is not to be considered as being limitative. For example, instead of providing an accentuated display upon the display monitor, it would also be possible to arrange to notify the driver by illuminating a light emitting device that is provided within the driver's cab 7. And it would also be possible to arrange to notify the driver by emitting, as auditory information, a notification sound via a speaker that is provided within the driver's cab 7. Or it would also be possible to arrange to notify the driver via auditory information only, or via a combination of visual information and auditory information.
(3) While, in the third embodiment described above, the output control unit 180B included the display control unit 181 and the operation control unit 182, it would also be acceptable to arrange to omit the display control unit 181, and only to provide the operation control unit 182. In this case, when it is determined by the determination unit 170 that an obstruction is present that must be notified, according to the vehicle state of the dump truck 1, only limitation of the traveling operation of the dump truck 1 will be performed. Moreover, it would also be acceptable to arrange to provide an ON/OFF mechanism at the exterior of the operation control unit 182, and to allow the operation control unit 182 to operate only if this mechanism is ON.
(4) With the first through the fourth embodiments explained above, the vehicle state of the dump truck 1 was determined on the basis of the signals from the shift lever 30 and the brake operating member 40. However, this should not be considered as being limitative; provided that it is possible to determine what the state of the dump truck 1 is, i.e. whether it is "moving forward", "preparing to move forward", "moving rearward", "preparing to move rearward", or "stationary", then it would be possible to arrange to determine the vehicle state of the dump truck 1 on the basis of a signal from some other operating member such as a parking brake switch or the like, or from some other sensor such as the subject vehicle speed detection device 45 or the like.
(5) With the first through the fourth embodiments explained above, it was arranged to capture images of the entire surroundings of the dump truck 1 by employing the cameras 21 through 24, and to display a virtual viewpoint image of the entire surroundings upon the display monitor; but this is not to be considered as being limitative. It would also be possible, for example, to arrange to generate a virtual viewpoint image of only the forward region on the basis of the image data from the front camera 21, and to display this image upon the display monitor. Moreover, it would be possible to arrange to generate a virtual viewpoint image of only the rearward region on the basis of the image data from the rear camera 24, and to display this image upon the display monitor. Yet further, it would be possible to arrange to change over the display upon the monitor between a virtual viewpoint image of only the frontward region, a virtual viewpoint image of only the rearward region, and a virtual viewpoint image of the entire surroundings of the dump truck 1.
(6) In the first through the fourth embodiments explained above, examples were explained in which the surroundings mounting devices 100, 100A, 100B, and 100C were mounted to a large sized dump truck 1, and this was an example of a work machine (or working machine). However, this should not be considered as being limitative; in a similar manner, these surroundings monitoring devices could also be mounted to a self-propelled work machine of some other type, such as a compact or mid-sized hydraulic excavator, or to a crane or the like other than a hydraulic excavator. It should be understood that, if the work machine includes a lower travelling body and an upper pivoting body that can pivot with respect to the lower travelling body, then the notification object regions may be set, taking into account the direction of pivoting of the upper pivoting body. By doing this, it would be possible to determine the presence of obstructions that must be notified to the driver in an appropriate manner.

Moreover, the above explanation is only an example; provided that the essential characteristics of the present invention are preserved, the present invention is not to be considered as being limited by the embodiments and variant embodiments described above. The first through the fourth embodiments and the variant embodiments may also be combined as appropriate. Furthermore, other embodiments that are considered to be within the range of the technical concept of the present invention are also included within its scope.

The disclosure of the following priority application is herein incorporated by reference:
Japanese Patent Application No. 2014-010706 (filed on January 23, 2014).

### REFERENCE SIGNS LIST

1: dump truck, 20: imaging device, 110: vehicle state determination unit, 120: notification object setting unit, 150: obstruction detection unit, 160: movement direction determination unit, 170: determination unit, 130: bird's eye view image generation unit, 181: display control unit, 182: operation control unit

## Claims

1. A surroundings monitoring device for work machine, comprising:
an imaging device (20) that captures an image of surroundings of the work machine;
an image generation unit (130) that performs point of view conversion upon an image captured by the imaging device (20) to convert to a point of view from above so as to generate a virtual viewpoint image; and
a display control unit (181) that displays the virtual viewpoint image generated by the image generation unit (130) upon a display device,
the surroundings monitoring device further comprises:
an obstruction detection unit (150) that detects an obstruction present in surroundings of the work machine;
a movement direction determination unit (160) that detects a direction of relative movement of the obstruction detected by the obstruction detection unit (150) with respect to the work machine; and
a determination unit (170) that, based on the direction of relative movement detected by the movement direction determination unit (160), if the direction of relative movement of the obstruction falls within a predetermined range of movement direction, determines that the obstruction is an obstruction to be notified that needs to be notified to a driver of the work machine.

2. The surroundings monitoring device for work machine according to Claim 1, further comprising:
a position detection unit (150) that detects a position of an obstruction detected by the obstruction detection unit (150) with respect to the work machine;
a vehicle state determination unit (110) that determines a vehicle state of the work machine; and
a notification object region setting unit (120) that sets a notification object region in the surroundings of the work machine according to the vehicle state determined by the vehicle state determination unit (110), wherein:
the determination unit (170) determines that the obstruction is the obstruction to be notified if the position of the obstruction detected by the position detection unit (150) is present within the notification object region set by the notification object region setting unit (120).

3. The surroundings monitoring device for work machine according to Claim 2, wherein:
the notification object region setting unit (120) changes the predetermined range of movement direction according to a distance from the work machine.

4. The surroundings monitoring device for work machine according to Claim 1, further comprising:
a notification device (50) that, when the determination unit (170) has determined that the obstruction is the obstruction to be notified, notifies the driver of presence of the obstruction to be notified.

5. The surroundings monitoring device for work machine according to Claim 1, further comprising:
an operation control unit (182, 60) that limits a traveling operation of the work machine when the determination unit (170) has determined that the obstruction is the obstruction to be notified.
